# EUROPEAN PATENT SPECIFICATION

(11) **EP 3 693 193 B1**
(45) Date of publication and mention of the grant of the patent: **12.10.2022**
(21) Application number: 19155827.9
(22) Date of filing: 06.02.2019
(51) Int. Cl.: B60C 19/12, B60C 19/00

(54) **TYRE WITH A NOISE REDUCTION LAYER**
REIFEN MIT GERÄUSCHDÄMPFERSCHICHT
PNEUMATIQUE AVEC COUCHE DE REDUCTION DE BRUIT

(43) Date of publication of application: 12.08.2020
(73) Proprietor: Bridgestone Europe NV/SA, 1932 Zaventem (BE)
(72) Inventor: Camosi, Luca, 00128 Roma (IT); Arends, Robin, 00128 Roma (IT); Fortunato, Gaetano, 00128 Roma (IT); Emiliani, Marco, 00128 Roma (IT)
(74) Representative: Marchetti, Alessio

(56) References cited:
- EP-A1- 2 749 433
- JP-A- H08 132 816
- JP-A- 2009 045 747
- JP-A- 2009 051 297

## Description

### FIELD

The present invention relates to the reduction of noise in tyres.

### BACKGROUND

Tyres for use on vehicles are operated under a range of different conditions. Under some operating conditions, tyres may generate undesirable levels of noise, which can negatively impact the experience of the driver or passengers.

Existing designs attempt to reduce noise generation in tyres by employing a noise reduction layer inside the tyre cavity. Unfortunately, the use of such layers often negatively impacts the overall performance of the tyre. For example, locating a noise reduction layer adjacent the bead of a tyre can reduce the ease with which a tyre is fitted and removed.

Further problems associated with existing uses of a noise reduction layer include the frequency with which damage is done to the layer due to foreign objections piercing the tread and damaging the layer, or due to contact with the tread itself when a large impact occurs. If the tyre includes a sealant layer to assist in repairing damage to the tread further risks exist. Impacts can cause the noise reduction layer to adhere to the sealant, thus reducing the effectiveness of the noise reduction.

Another problem associated with existing uses of noise reduction layers with sealant layers is that the presence of the noise reduction layer can prejudice the performance of the sealant layer. Impacts or foreign objects piercing the tyre can cause the noise reduction layer, or pieces broken off therefrom, to adhere to the sealant layer. This part of the noise reduction layer can be drawn into the damaged area of the tread and interfere with the sealing action of the sealant layer, reducing or removing the ability of the sealant layer to repair damage.

Stresses experienced by the noise reduction layer during use can also reduce its efficacy. When a rectangular section of material is curved to create an annular noise reduction layer, compression forces at the inner radial side can cause the noise reduction layer to wrinkle and become detached from the tyre. Tensile forces at the outer radial side can damage the noise reduction layer. Both of these can reduce the performance of the noise reduction layer.

EP2749433 provides a pneumatic tire at least having: a tread portion including a belt constituted of at least one belt layer; a bead portion; and an inner peripheral surface having short fibers fixed to at least a portion thereof.

JPH08132816 discloses a pneumatic tire fitted to a rim, wherein a ring-like cavity for filling tire air is formed, and a vibration damping sheet arranged on the cavity face of a tire assembly facing the cavity.

JP2009051297 discloses a pneumatic tire, which has an annular sound insulation layer formed of a porous material and extending circumferentially along the tire within a predetermined range on the inner surface of an inner liner between a position of a bead toe at a bead and an inner surface position at a tread ground contact end.

### SUMMARY

The present invention is a tyre as described in claim 1. The noise reduction layer may comprise at least one cutout. The noise reduction layer may comprise a plurality of cutouts. The noise reduction layer defines an inner radial side and an outer radial side. The inner radial side may comprise the at least one, or plurality of, cutout(s).

The tread portion may be located on an outer radial surface of the tyre and comprise the tread for engaging a road surface. A radial surface may describe the surface perpendicular to the radial direction and extending around the circumference of the tyre. The sidewall portion may comprise two sidewalls, which may be axially spaced and extend radially and circumferentially. The bead portion may comprise, for example at the radially inner side of each sidewall, a bead housing which may house a strengthening member for increasing the rigidity of the bead portion.

The noise reduction layer may be arranged on an inner surface of the sidewall portion, for example a sidewall thereof.

The tyre may comprise a single noise reduction layer. The noise reduction layer may be annular. The noise reduction layer may extend circumferentially around the tyre. The noise reduction layer may define an arc. The tyre may comprise two noise reduction layers, one on each of the sidewalls.

The noise reduction layer is formed by a plurality of discrete noise reduction layer parts.

The noise reduction layer comprises a plurality of discrete noise reduction layer parts. The noise reduction layer may comprise two, three, four, five, eight, ten or more than ten parts.

The noise reduction layer may extend around the circumference of the inner cavity of the tyre. Each noise reduction layer part may define an arc. Each noise reduction layer part may extend around a portion of the circumference of the tyre. The plurality of noise reduction layer parts may collectively form the noise reduction layer.

Using a plurality of discrete parts may make it easier to apply the noise reduction layer to the sidewall portion. Using a plurality of discrete parts may reduce differential stresses in the inner and outer radial sides of the noise reduction layer.

Each part of the noise reduction layer may be substantially rectangular when viewed along an axis of the tyre.

The inner radial side of the noise reduction layer may comprise a plurality of cutouts. Where comments are made herein with regard to cutouts, it is to be understood to also apply equally to a single cutout.

When a plurality of noise reduction layer parts are provided, each part may comprise at least one cutout.

The noise reduction layer may have a rectangular cross-section (e.g. when viewed in a circumferential direction). The noise reduction layer may define a depth in a radial direction. The depth may define a dimension of the installed noise reduction layer in a straight line parallel to the radial direction, or a dimension of the noise reduction layer following the contour of the sidewall. The noise reduction may define a thickness perpendicular to the sidewall portion. The depth and/or thickness may be constant around the circumferential length of the noise reduction layer.

The noise reduction layer may comprise a porous material. The noise reduction layer may comprise a foam.

The noise reduction layer may be annular.

The plurality of discrete noise reduction layer parts may be arranged to form an annular noise reduction layer. An annular noise reduction layer is more easily and readily located within the tyre, as it corresponds to the shape of the sidewall. Forming the annular noise reduction layer out of a parallelepiped-shaped piece of material facilitates a more efficient use of material and minimises wastage. Forming the noise reduction layer out of discrete parts may make it easier to arrange the noise reduction layer in the tyre and may help avoid differential stresses being formed in the inner and outer radial sides of the noise reduction layer.

The noise reduction layer may be configured to reduce the noise of the tyre during use. Noise may be reduced in tyres according to the present disclosure.

The tyre may comprise a sealant layer adjacent the tread portion in the inner cavity of the tyre.

The sealant layer may be located on the inner surface of the tread portion of the tyre. The sealant layer may extend over an inside of the tread of the tyre.

The sealant layer may be configured to assist in repairing damage to the tread portion of the tyre.

The noise reduction layer may be arranged on the sidewall portion such that an outer radial side of the noise reduction layer is separated from the sealant layer. The noise reduction layer may be arranged on the sidewall portion such that an inner radial side of the noise reduction layer is separated from a radially innermost edge of the bead portion.

An outer radial side of the noise reduction layer may be arranged such that it provides between an overlap of up 15mm or a separation of up to 55mm with the tread portion or sealant layer. An inner radial side of the noise reduction layer may be separated from a radially innermost edge of the bead portion by a distance of greater than 20mm. An outer radial side of the noise reduction layer may be separated from the tread portion (or tread) or the sealant layer. The outer radial side of the noise reduction layer may overlap the tread portion (or tread) or the sealant layer. The outer radial side of the noise reduction layer may be separated from the tread portion (or tread) or the sealant layer by a distance of up to 50mm, or up to 30mm, or up to 10mm. The outer radial side of the noise reduction layer may overlap the tread portion (or tread) or the sealant layer by a distance of up to 10mm; or up to 5mm.

The outer radial side of the noise reduction layer may be arranged such that it provides: between an overlap of up 15mm or a separation of up to 55mm with the tread portion or sealant layer; between an overlap of up to 10mm or a separation of up to 30mm with the tread portion or sealant layer; between an overlap of up to 5mm and a separation of up to 30mm with the tread portion or sealant layer; between an overlap of up to 5mm and a separation of up to 10mm with the tread portion or sealant layer; or a separation of up to 10mm with the tread portion or sealant layer.

Separating the noise reduction layer from the sealant may prevent the noise reduction layer from interfering with the performance of the sealant layer, especially following deformation of the tyre. Separating the noise reduction layer from the tread portion may prevent the noise reduction layer from getting damaged during deformation of the tyre or puncture of the tread portion. Conversely, having a large separation between the sealant layer and the noise reduction layer can reduce the total volume of noise reduction layer inside the tyre and, accordingly, negatively impact the noise reduction performance of the layer. The selected separation distances and ranges disclosed herein provide an optimal level at which the risk of the noise reduction layer negatively impacting the performance of the sealant layer is minimised, and the noise reduction performance of the noise reduction layer is maximised.

The noise reduction layer may be attached to the tyre - e.g. adjacent the sidewall portion in the inner cavity of the tyre - by adhesive. Where the noise reduction layer overlaps a sealant layer, the sealant layer may act as adhesive for a part of the noise reduction layer - e.g. attaching it to the tyre.

An inner radial side of the noise reduction layer may be separated from a radially innermost edge (e.g. the bead toe) of the bead portion. The inner radial side of the noise reduction layer may be separated from the radially innermost edge of the bead portion by a distance of greater than 20mm, or between 20 and 50mm; 25 and 40mm or 27.5 and 35mm. Locating the noise reduction layer close to the bead toe can negatively impact the tyre mounting process. The inclusion of a separation distance negates this issue.

Arranging the noise reduction layer as described herein may allow the layer to be attached a detached using existing tools.

A thickness of the noise reduction layer may be between 5 and 55mm; 10 to 40mm or 15 to 30mm.

The thickness of the noise reduction layer may be chosen to maximise the noise reduction properties of the tyre.

The noise reduction layer may define a thickness in a direction perpendicular to the sidewall portion and the thickness of the noise reduction layer varies in a radial direction of the tyre.

The thickness of the noise reduction layer may vary linearly.

The thickness of the noise reduction layer may be a minimum adjacent an outer edge of the noise reduction layer.

The thickness of the noise reduction layer may increase from a minimum thickness adjacent an outer edge of the noise reduction layer to a maximum thickness in a central region of the noise reduction layer.

A profile of the noise reduction layer may correspond to an inner surface of the sidewall portion. The noise reduction layer may be configured to have a substantially rectangular profile, such that the noise reduction layer provides a substantially vertical surface when the tyre is in an un-deformed state.

The noise reduction layer may be configured to have a substantially triangular profile, such that the greatest thickness is provided at an intermediate point or midpoint (in a radial direction) of the noise reduction layer.

The thickness of the noise reduction layer may be substantially dependent on - e.g. correspond to, or be proportional to - the width of the tyre (e.g. at that radial location). The noise reduction layer may comprise a maximum thickness at a radial location substantially corresponding to the maximum thickness of the tyre. The thickness of the noise reduction layer may decrease (e.g. linearly) from the maximum thickness to a decreased thickness (which may be 0mm) at the innermost and/or outermost edges of the noise reduction layer.

The relative thickness and shape of the noise reduction layer can affect noise reduction performance and also reduce the ease with which the noise reduction layer can adhere to the sealant layer, where present, or be damaged by foreign objects piercing the thread portion.

A distance between a first cutout and second cutout may be between about 30 and 400mm, 100 and 400mm or 200 and 300mm in a circumferential direction.

Cutouts may be regularly spaced around the circumference of the noise reduction layer. Cutouts may be spaced by 30 to 400mm circumferentially around the noise reduction layer.

The cutouts may be configured or arranged to reduce internal stresses within the noise reduction layer. The cutouts may be configured or arranged to reduce compression, wrinkling or buckling of the noise reduction surface at the inner radial side of the noise reduction layer. The cutouts may be defined by the internal profile of the noise reduction layer. The profile may comprise a castellated, oscillating or concertinaed profile.

The cutouts may extend from an inner radial surface of the noise reduction layer in a radial direction, towards the outer radial surface.

The cutouts may describe any removal of material from a side of the noise reduction layer and as such may include slits, slots or gaps. The cutouts may define a castellated, concertinaed or undulating profile (e.g. of the inner radial surface of the noise reduction layer).

The cutouts may be triangular, rectangular or linear (for example when viewed along the centre axis of the tyre).

The cutout may extend (or the cutouts may extend) in the radial direction by between 50 and 100%, 55 to 80% or 60 to 70% of the depth of the noise reduction layer in a radial direction.

The inner radius of an arc with a certain depth is smaller than its outer radius. When an arc, or annulus, is formed by deforming a piece of material, this results in tension around the outer circumference and/or compression around the inner circumference. Employing cutouts around the outer radial side of an arc-shaped or annular noise reduction layer may reduce tension, but it may also reduce the amount of noise reduction layer present within a predefined footprint, since the cutouts open up as the noise reduction layer is attached and do not provide any noise reduction properties.

Employing cutouts around the inner radial side may reduce or eliminate this compression. This may allow the material to be used as the noise reduction material to be sized according to the outer circumference, thus avoiding tension in the outer radial side. Additionally, in use, the cutouts in the inner radial side may "close up" (either partially, or completely) as the noise reduction layer is arranged in the tyre. This allows more of the noise reduction layer to be present between a given fixed minimum inner and maximum outer radius compared to employing cutouts in the outer circumference.

The cutouts may be arranged such that, when the noise reduction layer is arranged on the sidewall portion in a tyre, they are closed. That is, opposite surfaces defining the cutout may abut when the noise reduction layer is arranged in the tyre. This may be case where the noise reduction layer is formed from a parallelepiped and formed into an annulus.

The outer radial side of the noise reduction layer comprises a coating.

The coating may be arranged on a side of the noise reduction layer between the noise reduction layer and the tread portion and/or sealant. The coating is anti-adhesive. The coating may be arranged on a side of the noise reduction layer facing the sealant and/or the tread portion. The coating may extend over the full thickness of the noise reduction layer or only part thereof. The coating may extend radially along the whole or part of the depth of the noise reduction layer.

The coating may be an anti-stick sheet layer; a polar material, paint or coating; a thin layer of silicone/PTFE based foam; a surface treatment of the noise reduction layer; or a high void ratio mesh/fabric.

The coating may be an anti-adhesive layer comprising silicone.

The coating may be configured to reduce the ease with which the noise reduction layer adheres to the sealant. The coating may have an adhesive force on sealant between 0.001 and 10kPa, or between 0.01 and 7 kPa.

The coating may reduce the tendency of the noise reduction layer to adhere to the sealant, which can negatively impact the performance of the sealant. The coating may also protect the noise-reduction layer from damage (regardless of whether a sealant is present).

The coating may comprise a porous material. The coating may have a density of between 10 and 250 kg/m³. The coating may have a thickness of between 0.1 and 10mm; 0.2 and 5mm; or 0.5 and 3mm.

The density of the noise reduction layer may vary through the thickness of the noise reduction layer.

The density of the noise reduction layer adjacent the sidewall portion may be lower than the density of the noise reduction layer adjacent the inner cavity of the tyre.

The noise reduction layer may comprise two discrete density regions - a first region of a first density adjacent the sidewall portion and a second region of a second density which is separated from the sidewall portion by the first region. The first density may be lower than the second density. Alternatively, the density of the noise reduction layer may increase gradually through the thickness of the noise reduction layer from a minimum adjacent the sidewall to a maximum at the cavity-side of the layer. Where the noise reduction layer is a porous material, the density may be controlled by altering the cell size. Increasing the cell size will reduce the density of the noise reduction layer whereas reducing the cell size will increase the density of the noise reduction layer. Alternatively, alternative materials may be selected, or the composition of the material may be altered in order to control the density.

The noise reduction layer may comprise a first sub-layer, attached to the inside of the sidewall portion, and a second sub-layer, attached to the first sub-layer and extending into the inner cavity of the tyre. The density of the first sub-layer may be lower than the density of the second sub-layer.

The density of the noise reduction layer may be consistent in a circumferential direction.

The elasticity, e.g. Young's Modulus, of the noise reduction layer may vary in a corresponding way to the density of the noise reduction layer.

Employing lower density materials adjacent the sidewall portion may increase cooling properties of the noise reduction layer and improve performance.

Reducing the amount of heat accumulated from the sidewall portion of the tyre during use may minimise the negative impact that heat can have on the performance of the noise reduction layer and any adhesive that might be used to attach it to the sidewall portion.

Additionally, it can be beneficial for the noise reduction layer to minimise stresses at the interface between the noise reduction layer and the sidewall portion, in order to improve service life and performance.

The noise reduction layer may comprise a groove in a side of the noise reduction layer parallel to the sidewall portion. The groove may extend into the thickness of the noise reduction layer.

The groove may extend in a circumferential direction around part, or all, of the noise reduction layer. There may be a plurality of such grooves, each discrete.

The groove may act to reduce the thickness of the noise reduction layer at a specific location. The groove may have a rectangular or triangular profile.

The groove may increase the flexibility at a specific location of the noise reduction layer, thus allowing the noise reduction layer to accommodate deformation of the tyre more easily.

Further the invention is a method for manufacturing a tyre according to claim 14.

### DETAILED DESCRIPTION

Figure 1 is a perspective view of part of a tyre with a noise reduction layer and sealant layer not falling within the literal scope of the claims;
Figure 2 is a schematic side view of part of a tyre with a noise reduction layer not falling within the literal scope of the claims;
Figure 3 is a cross-section of part of a tyre with a noise reduction layer not falling within the literal scope of the claims;
Figure 4 is a cross-section of part of a further tyre with a noise reduction layer not falling within the literal scope of the claims;
Figure 5 is a cross-section of part of a further tyre with a noise reduction layer not falling within the literal scope of the claims;
Figure 6 is a cross-section of part of a further tyre with a noise reduction layer not falling within the literal scope of the claims;
Figure 7 is a cross-section of part of a further tyre with a noise reduction layer not falling within the literal scope of the claims;
Figure 8 is a cross-section of part of a further tyre with a noise reduction layer not falling within the literal scope of the claims;
Figure 9 is a cross-section of part of a further tyre with a noise reduction layer not falling within the literal scope of the claims;
Figure 10 is a cross-section of part of a further tyre with a noise reduction layer;
Figure 11 is a cross-section of part of a further tyre with a noise reduction layer;
Figure 12 is a cross-section of part of a further tyre with a noise reduction layer not falling within the literal scope of the claims;
Figure 13 is a cross-section of part of a further tyre with a noise reduction layer;
Figure 14 is a cross-section of part of a further tyre with a noise reduction layer;
Figure 15 is a cross-section of part of a further tyre with a noise reduction layer;
Figure 16 is a perspective view of part of a tyre with a noise reduction layer and sealant layer not falling within the literal scope of the claims;
Figure 17 shows a noise reduction layer comprising a plurality of discrete noise reduction layer parts on the sidewall portion of a tyre, not falling within the literal scope of the claims.

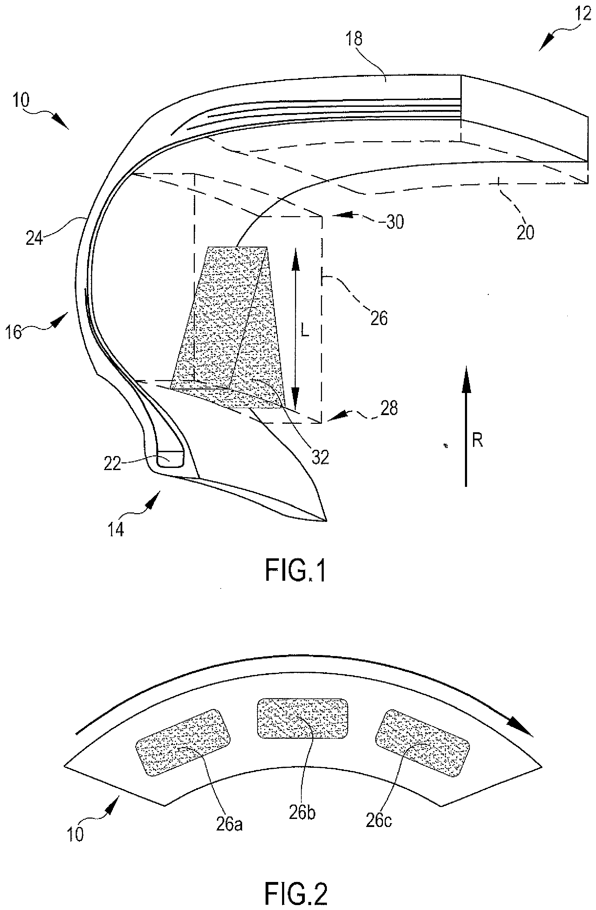

Turning now to Figure 1, a perspective view of a part of a tyre 10 is shown. The tyre comprises a tread portion 12 arranged to engage a road surface. The tread portion 12 is arranged at the outer radial side of the tyre 10. A general radial direction of the tyre is indicated as "R". The tyre 10 also comprises a bead portion 14. The bead portion 30 14 is arranged at an inner radial side of the tyre 10. The bead portion 14 is arranged to connect the tyre to a hub or wheel (not shown). The tyre 10 also comprises a sidewall portion 16. The sidewall portion 16 extends between, and connects, the tread portion 12 and the bead portion 14. The tread portion 12, bead portion 14 and sidewall portion 16 collectively define an inner cavity of the tyre 10, which may contact pressurised air 35 during use. The tread portion 12 comprises tread 18 designed to engage and grip a road surface during use. In the tyre 10 of figure 1, a sealant layer 20 is arranged on an inner surface of the tread portion 12. The sealant layer 20 is arranged to cover at least a portion of the, or perhaps the entire, inner surface of the tread 18. The sealant layer 20 is configured to repair damage caused to the tread 18 during use.

The bead portion 14 comprises a strengthening member 22 located inside a cavity 24 formed in the bead portion 14, for example to provide strength and rigidity to the tyre 10.

The sidewall portion 16 comprises a sidewall 24. In Figure 1, the sidewall 24 is formed of a substantially radially-extending rubber wall which connects the tread portion 12 and bead portion 14. In Figure 1, only one sidewall 24 is shown, however, there would be a second sidewall on the other side of the tread portion 12.

The tyre 10 further comprises a noise reduction layer 26 having an inner radial side 28 and an outer radial side 30. Both the inner and outer radial side 28 30 extend circumferentially around the tyre 10 and are perpendicular to a radial direction. The inner radial side 28 has a smaller radius - and hence circumference - than the outer radial side 30.

The noise reduction layer 26 is configured to reduce the amount of noise created by the tyre 10 during use - that is, when rolling over a surface. This is achieved by absorbing vibrations present within the tyre 10.

In the example of Figure 1, the noise reduction layer 26 comprises a foam material.

A cutout 32 is schematically shown in Figure 1, located at the inner radial side 28 of the noise reduction layer 26. The cutout 32 extends from the inner radial side 28 towards the outer radial side 30. The length of the cutout "L" in this radial direction is between 50% and 90% of the depth of the noise reduction layer in this dimension. The cutout 32 extends through the entire thickness of the noise reduction layer 26, (wherein the thickness of the noise reduction layer 26 is the dimension perpendicular to the sidewall 24 or sidewall portion 16).

Although the cutout 32 is depicted as being triangular in shape when the noise reduction layer 26 is installed in a tyre 10, in some cases the cutout 32 may be 'closed', or appear as a narrow slit or cut, when the noise reduction layer 26 is installed in a tyre 10. This might be the case when the noise reduction layer 26 is formed from an elongated parallelepiped and bent into an annulus to attach to the sidewall 24.

Consistent references will be used to refer to corresponding features. Where a feature of a figure is not described in detail it may be considered to be equivalent to that of a preceding Figure.

Figure 2 is a schematic side view of part of a tyre 10 showing an alternative example of a noise reduction layer 26. In Figure 2, the noise reduction layer 26 comprises a plurality of discrete parts 26a 26b 26c which collectively form the noise reduction layer 26. In certain examples, each of the parts 26a 26b 26c may comprise a single, or a plurality of, cutouts.

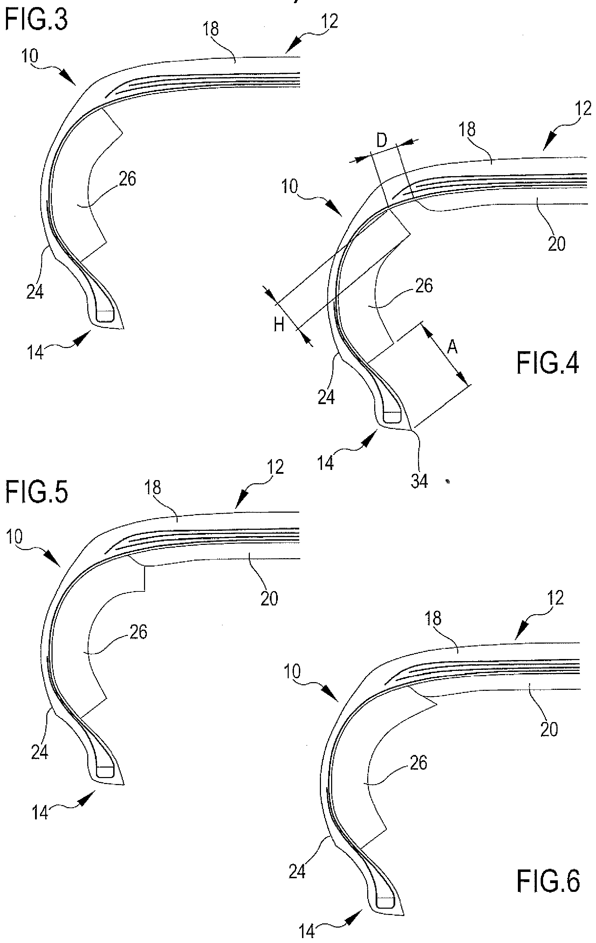

Figure 3 is a cross-section of part of a tyre 10 comprising a noise reduction layer 26 similar to that of Figure 1. The tyre 10 in Figure 3 does not comprise a sealant layer 20.

Figure 4 is a cross-section of part of a tyre 10 comprising a noise reduction layer 26 similar to that of Figure 1. The thickness of the noise reduction layer 26 is labelled as "H". This thickness may be between 5 and 55mm, 10 and 40mm or 15 and 30mm.

In the tyre of Figure 4 the noise reduction layer 26 is separated from the sealant layer 20 by a gap of length "D". This gap length "D" may be up to 10mm, up to 30mm or up to 50mm. In some examples (as shown in Figure 5), the noise reduction layer 26 may overlap the sealant layer 20. Where an overlap is present, the distance of overlap lay be up to 5mm, up to 10mm or up to 15mm. This may be represented as a negative value of "D".

The noise reduction layer 26 of Figure 4 is also separated from the edge 34, or tip, of the bead portion 14 (which may be referred to as the bead toe), for example by a distance "A". This separation distance "A" may be greater than 20mm, or in the range of 20 to 50mm, 25 to 40mm or 27.5 to 35mm.

The noise reduction layer 26 of Figure 5 overlaps the sealant layer 20. As noted above, this overlap may be for a distance of up to 5, 10 or 15mm.

As shown in Figure 6, the outer radial side 30 does not necessarily need to comprise a surface which is perpendicular to the sidewall 24. In some examples, it may follow an adjacent surface - for example that of the sealant layer 20.

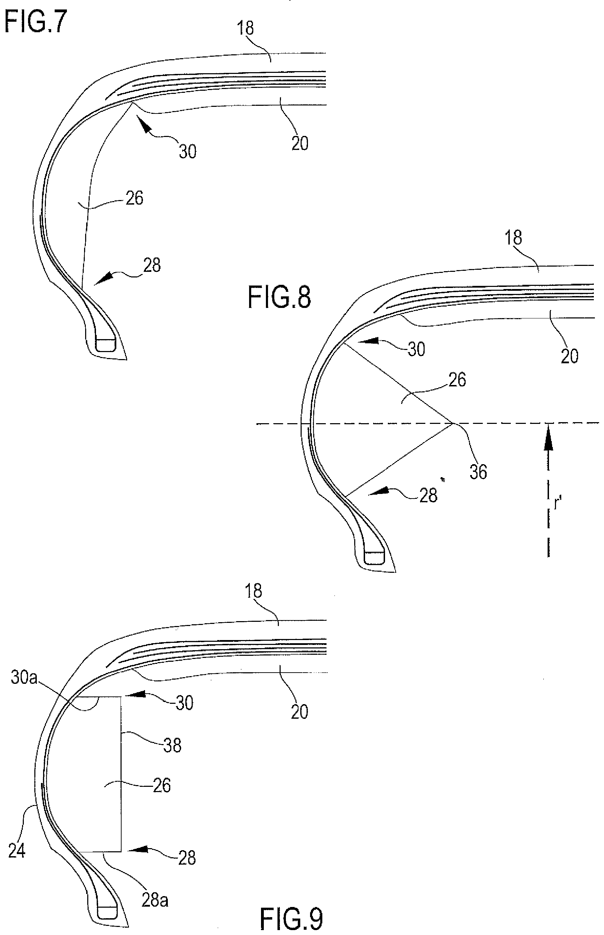

Figures 7 to 8 shown noise reduction layers with a variety of different cross-sectional shapes.

The thickness of the noise reduction layer 26 of Figure 7 gradually tapers off at the inner and outer radial sides 28 30 without any surfaces perpendicular to the radial direction of the tyre.

The noise reduction layer 26 in Figure 8 has a substantially triangular profile. A maximum thickness is provided at a midpoint 36. The location of this maximum thickness of noise reduction layer 26 may correspond to the radial location of the maximum thickness of the tyre: r'. The noise reduction layer 26 of Figure 8 further comprises linearly tapering surfaces extending from the midpoint to the inner and outer radial sides 28 30. The thickness of the noise reduction layer 26 at the inner and outer radial sides 28 30 is zero.

In Figure 9 the noise reduction layer 26 comprises a rectangular profile. Each of the inner and outer radial sides 28 30 comprises a radial surface 28a 30a arranged perpendicularly to the radial direction of the tyre 10. The noise reduction layer 26 is arranged to provide an inner surface 38 which is parallel to the radial and circumferential directions of the tyre 10. Due to the curvature of the sidewall 24, the noise reduction layer 26 is thickest near a midpoint of the noise reduction layer 26.

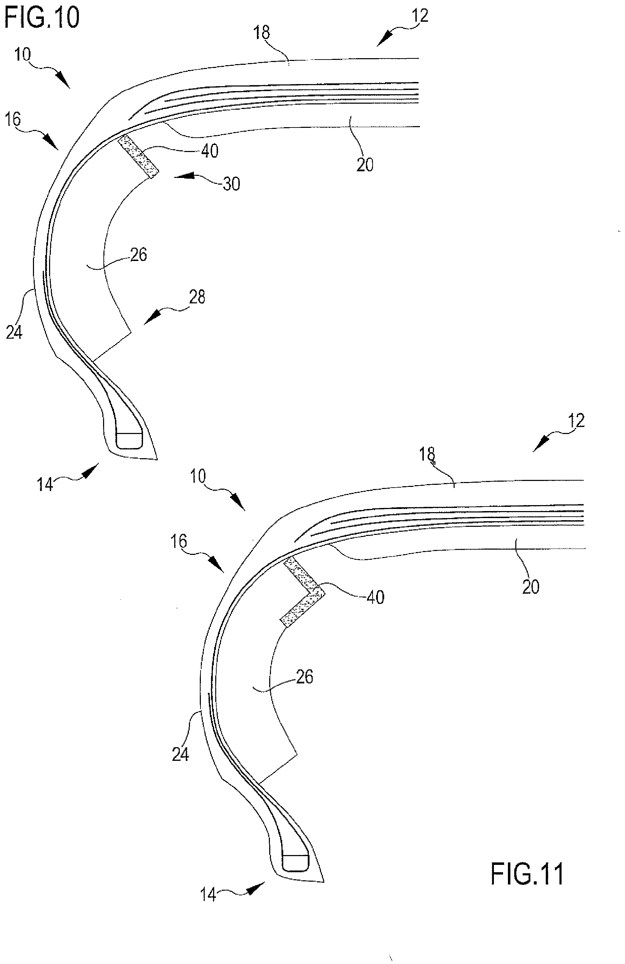

Figure 10 shows a tyre 10 comprising a noise reduction layer 26 which comprises a coating. The coating is a silicone anti-adhesive layer 40. The silicone anti-adhesive layer 40 is arranged at the outer radial side 30 of the noise reduction layer 26 so that it faces the sealant layer 20. The silicone anti-adhesive layer 40 has an adhesive force on the sealant of between 0.01 and 7 kPa. As such, the silicone anti-adhesive layer 40 acts to prevent the noise reduction layer 26 from becoming stuck to the sealant layer 20, which can negatively impact the sealing performance of the sealant layer 20.

In addition to maintaining a the performance of the sealant layer 20, the silicone anti-adhesive layer 40 acts to protect the noise reduction layer 26 from damage, for example due to a foreign body (e.g. a nail) piercing the tread portion 12 in the direction of the noise reduction layer 26. Instead of being pierced or damaged by the foreign body, the noise reduction layer 26 will remain intact due to the coating blocking the foreign body.

In Figure 11, the coating extends over an end surface of the outer radial side 30 which is perpendicular to the sidewall portion 16. In Figure 11, the coating extends over an end surface of the outer radial side 30 and a portion of an inner surface which extends parallel to the sidewall portion 16.

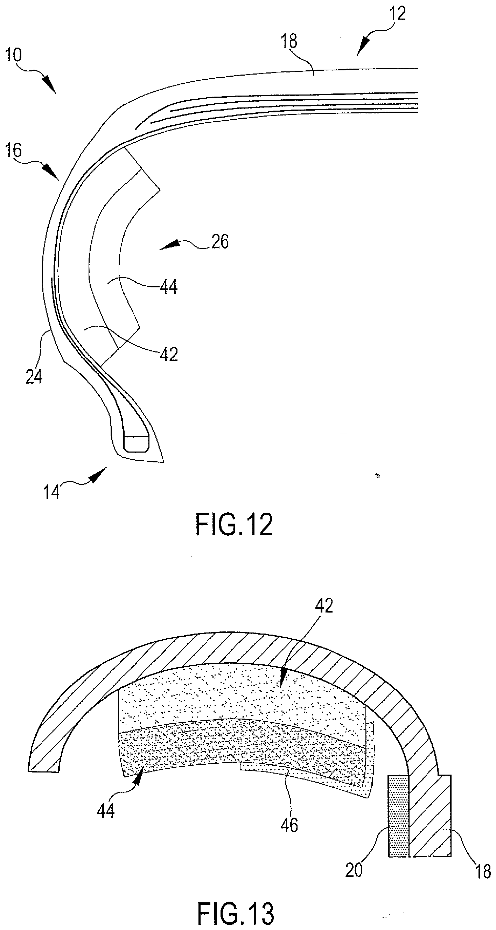

Figure 12 depicts a tyre 10 with a noise reduction layer 26 comprising two discrete density regions. A first region 42 - or sub-layer - is located adjacent and attached to the sidewall 24. The first region 42 has a first density. A second region 44 - or sub-layer - is attached to first region 42. The second region 44 has a second density, which is higher than the first density.

Figure 13 shows a further tyre 10 (rotated clockwise by 90 degrees with respect to Figure 12) comprising a noise reduction layer 26 with two regions 42 44. In Figure 13, a coating 46 is provided over a part of the noise reduction layer 26 adjacent the sealant layer 20.

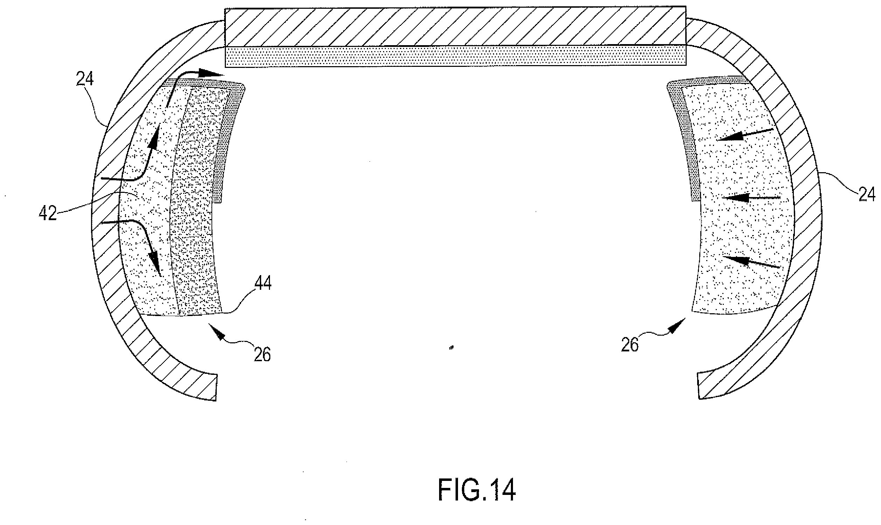

Figure 14 illustrates an effect of having a noise reduction layer 26 with two different density regions 42 44. On the left sidewall 24 of Figure 14, a noise reduction layer 26 comprises two different density regions 42 44, with a lower density region adjacent the sidewall 24. As heat is generated in the sidewall 24 during use due to deformation of the sidewall 24, it is dissipated and flows towards the cavity through the lower density region 42. In comparison, on the right sidewall 24 of Figure 14, the higher density of the noise reduction layer26 adjacent the sidewall results in the generated heat being kept locally, thus reducing performance of the noise reduction layer 26, sidewall 24 and/or any adhesive attaching the noise reduction layer 26 to the sidewall. The flow of heat in both of the above two cases is illustrated by the arrows in Figure 14.

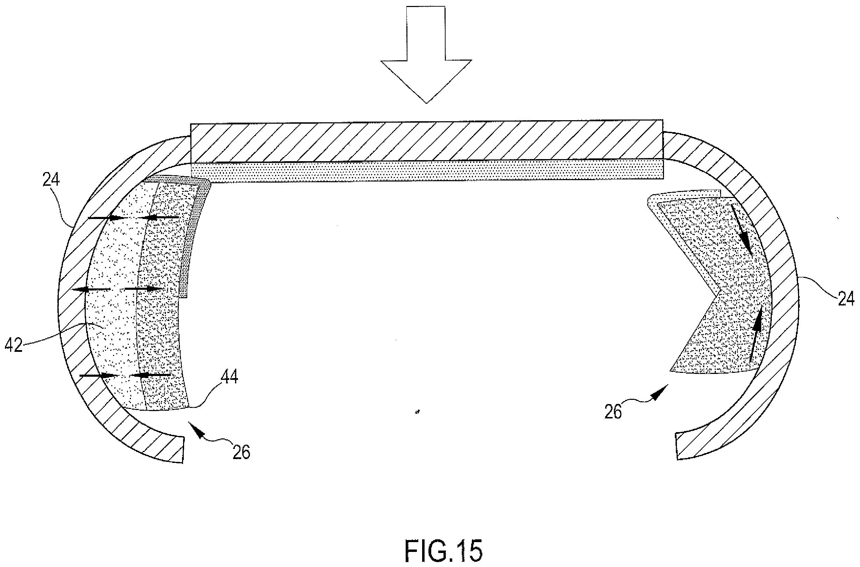

Figure 15 illustrates a further effect of having a noise reduction layer 26 with two different density regions 42 44. On the left sidewall 24 of Figure 15, a noise reduction layer 26 comprises two different density regions 42 44, with a lower density region adjacent the sidewall 24. As the sidewall deforms, this deformation is taken up by, and compensated for, by deformation of the soft, lower-density region 42 adjacent the sidewall 24. In comparison, on the right sidewall 24 of Figure 14, the stiffer, higherdensity of the noise reduction layer 26 adjacent the sidewall results in shear stresses being generated in the noise reduction layer 26 which can negatively impact performance. Loading and the transfer of forces are illustrated in Figure 15 by arrows.

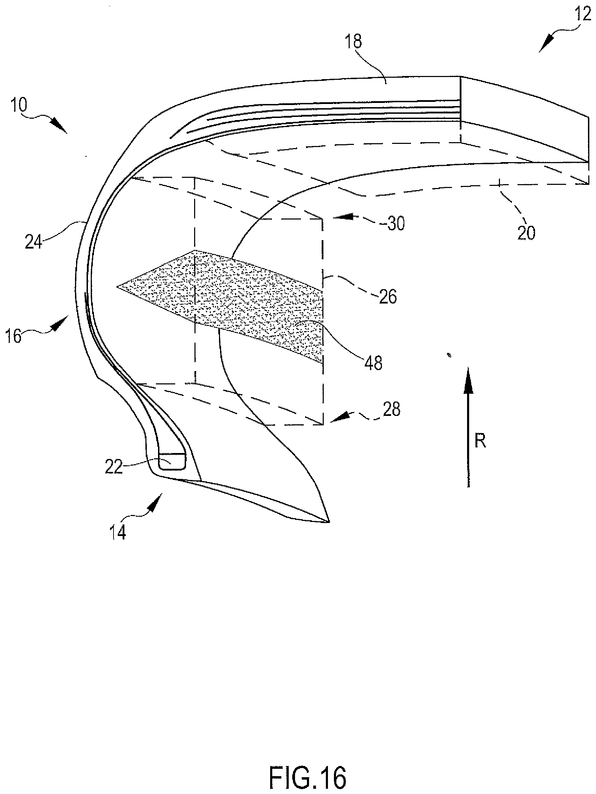

Turning now to Figure 16, a further example of a tyre 10 is shown. In Figure 16, the cutouts 32 are not shown for clarity.

The noise reduction layer 26 of Figure 16 comprises a groove 48. The groove is arranged in a side of the noise reduction layer 26 that is parallel to the sidewall portion 16. The groove 48 therefore extends into the thickness of the noise reduction layer 26. In the example of Figure 16 the groove has a triangular cross-section, although other cross-sections may be used. The groove 48 shown in Figure 16 is a circumferential groove.

The groove 48 may permit the noise reduction layer 26 to flex more easily in a radial direction - for example to more easily accommodate deformation of the sidewall 24 to which it is attached.

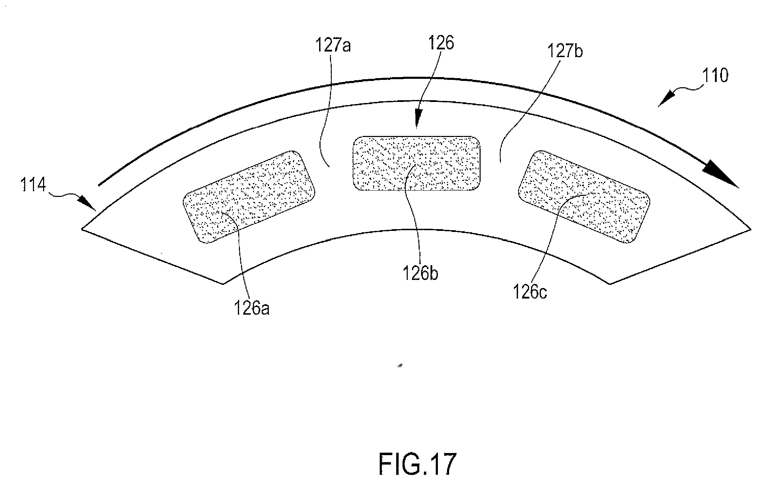

Figure 17 shows part of the inner cavity of a tyre 110. The noise reduction layer 126 comprises a plurality of discrete noise reduction parts 126a, 126b, 126c. In the example of Figure 17, each noise reduction part 126a, 126b, 126c is substantially rectangular and is arranged in an arc. The noise reduction parts 126a, 126b, 126c are arranged on the tyre sidewall in an end to end arrangement to form an annular noise reduction layer 126.

As the noise reduction layer parts 126a, 126b, 126c are separate and discrete, gaps 127a, 127b, 127c are present between adjacent noise reduction layer parts 126a, 126b, 126c.

## Claims

1. A tyre (10) comprising:
a tread portion (12);
a bead portion (14); and
a sidewall portion (16) extending between the bead portion (14) and the tread portion (12);
wherein the tread portion (12), bead portion (14) and sidewall portion (16) define an inner cavity of the tyre (10);
the tyre (10) further comprising a noise reduction layer (26) arranged on the sidewall portion (16) in the inner cavity of the tyre (10);
wherein the noise reduction layer (26) defines an inner radial side (28) and an outer radial side (30); and
wherein the noise reduction layer (26) comprises a plurality of discrete noise reduction layer parts (26a, 26b, 26c);
the tyre being **characterised in that**
the outer radial side (30) of the noise reduction layer (26) comprises an anti-adhesive coating.

2. The tyre (10) of claim 1, wherein the inner radial side (28) comprises at least one cutout (32).

3. The tyre (10) according to claim 1 or claim 2, wherein the tyre (10) comprises a sealant layer adjacent the tread portion (12) in the inner cavity of the tyre (10).

4. The tyre (10) according to claim 3, wherein the noise reduction layer (26) is arranged on the sidewall portion (16) such that the outer radial side (30) of the noise reduction layer (26) is separated from the sealant layer and the inner radial side (28) of the noise reduction layer (26) is separated from a radially innermost edge of the bead portion (14).

5. The tyre (10) according to claim 3, wherein the outer radial side (30) of the noise reduction layer (26) is arranged such that it provides between an overlap of up 15mm or a separation of up to 55mm with the sealant layer and the inner radial side (28) of the noise reduction layer (26) is separated from a radially innermost edge of the bead portion (14) by a distance of greater than 20mm.

6. The tyre (10) according to any of the preceding claims, wherein the noise reduction layer (26) defines a thickness in a direction perpendicular to the sidewall portion (16) and the thickness of the noise reduction layer (26) varies in a radial direction of the tyre (10).

7. The tyre (10) according to claim 6, wherein the thickness of the noise reduction layer (26) is a minimum adjacent an outer edge of the noise reduction layer (26).

8. The tyre (10) of any of the preceding claims, wherein the inner radial side comprises a plurality of cutouts (32) and a distance between a first cutout (32) and a second cutout (32) is between about 30 and 400mm in a circumferential direction.

9. The tyre (10) according to any of the preceding claims when dependent on claim 2, wherein each cutout (32) extends in the radial direction by between 50 and 90% of the depth of the noise reduction layer (26) in a radial direction.

10. The tyre (10) according to any of the preceding claims, wherein the anti-adhesive coating comprises silicone.

11. The tyre (10) according to any of the preceding claims, wherein the density of the noise reduction layer (26) varies through the thickness of the noise reduction layer (26).

12. The tyre (10) according to claim 11, wherein the density of the noise reduction layer (26) adjacent the sidewall portion (16) is lower than the density of the noise reduction layer (26) adjacent the inner cavity of the tyre (10).

13. The tyre (10) according to any of the preceding claims, wherein the noise reduction layer (26) comprises a groove in a side of the noise reduction layer (26) parallel to the sidewall portion (16), wherein the groove extends into the thickness of the noise reduction layer (26).

14. A method for manufacturing a tyre (10), comprising:
providing a discrete plurality of noise reduction layer (26) parts (26a, 26b, 26c); and arranging the noise reduction layer (26) parts (26a, 26b, 26c) on the sidewall portion (16) of a tyre (10) to form a noise reduction layer (26) extending around the circumference of the tyre (10),
wherein the noise reduction layer (26) defines an inner radial side (28) and an outer radial side (30); and
wherein the outer radial side (30) of the noise reduction layer (26) comprises a coating which is anti-adhesive.

## Patentansprüche

1. Reifen (10), umfassend:
einen Laufflächenabschnitt (12);
einen Wulstabschnitt (14); und
einen Seitenwandabschnitt (16), der sich zwischen dem Wulstabschnitt (14) und dem Laufflächenabschnitt (12) erstreckt;
wobei der Laufflächenabschnitt (12), der Wulstabschnitt (14) und Seitenwandabschnitt (16) einen inneren Hohlraum des Reifens (10) definieren;
wobei der Reifen (10) ferner eine Geräuschreduktionsschicht (26) umfasst, die auf dem Seitenwandabschnitt (16) im inneren Hohlraum des Reifens (10) angeordnet ist;
wobei die Geräuschreduktionsschicht (26) eine innere radiale Seite (28) und eine äußere radiale Seite (30) definiert; und
wobei die Geräuschreduktionsschicht (26) eine Vielzahl von separaten Geräuschreduktionsschichtteilen (26a, 26b, 26c) umfasst; wobei der Reifen **dadurch gekennzeichnet ist, dass** die äußere radiale Seite (30) der Geräuschreduktionsschicht (26) eine antiadhäsive Beschichtung umfasst.

2. Reifen (10) nach Anspruch 1, wobei die innere radiale Seite (28) mindestens eine Ausnehmung (32) umfasst.

3. Reifen (10) nach Anspruch 1 oder Anspruch 2, wobei der Reifen (10) eine Dichtmittelschicht benachbart zu dem Laufflächenabschnitt (12) im inneren Hohlraum des Reifens (10) umfasst.

4. Reifen (10) nach Anspruch 3, wobei die Geräuschreduktionsschicht (26) auf dem Seitenwandabschnitt (16) derart angeordnet ist, dass die äußere radiale Seite (30) der Geräuschreduktionsschicht (26) von der Dichtmittelschicht getrennt ist und die innere radiale Seite (28) der Geräuschreduktionsschicht (26) von einem radial innersten Rand des Wulstabschnitts (14) getrennt ist.

5. Reifen (10) nach Anspruch 3, wobei die äußere radiale Seite (30) der Geräuschreduktionsschicht (26) derart angeordnet ist, dass sie zwischen einer Überlappung von bis 15 mm oder einer Trennung von bis zu 55 mm mit der Dichtmittelschicht bereitstellt und die innere radiale Seite (28) der Geräuschreduktionsschicht (26) von einem radial innersten Rand des Wulstabschnitts (14) um einen Abstand von mehr als 20 mm getrennt ist.

6. Reifen (10) nach einem der vorstehenden Ansprüche, wobei die Geräuschreduktionsschicht (26) eine Dicke in einer Richtung senkrecht zum Seitenwandabschnitt (16) definiert und die Dicke der Geräuschreduktionsschicht (26) in einer radialen Richtung des Reifens (10) variiert.

7. Reifen (10) nach Anspruch 6, wobei die Dicke der Geräuschreduktionsschicht (26) benachbart zu einem Außenrand der Geräuschreduktionsschicht (26) ein Minimum ist.

8. Reifen (10) nach einem der vorstehenden Ansprüche, wobei die innere radiale Seite eine Vielzahl von Ausnehmungen (32) umfasst und ein Abstand zwischen einer ersten Ausnehmung (32) und einer zweiten Ausnehmung (32) in einer Umfangsrichtung zwischen etwa 30 und 400 mm beträgt.

9. Reifen (10) nach einem der vorstehenden Ansprüche bei Abhängigkeit von Anspruch 2, wobei sich jede Ausnehmung (32) in radialer Richtung um zwischen 50 und 90 % der Tiefe der Geräuschreduktionsschicht (26) in einer radialen Richtung erstreckt.

10. Reifen (10) nach einem der vorstehenden Ansprüche, wobei die antiadhäsive Beschichtung Silikon umfasst.

11. Reifen (10) nach einem der vorstehenden Ansprüche, wobei die Dichte der Geräuschreduktionsschicht (26) über die Dicke der Geräuschreduktionsschicht (26) hinweg variiert.

12. Reifen (10) nach Anspruch 11, wobei die Dichte der Geräuschreduktionsschicht (26) benachbart zu dem Seitenwandabschnitt (16) niedriger ist als die Dichte der Geräuschreduktionsschicht (26) benachbart zu dem inneren Hohlraum des Reifens (10).

13. Reifen (10) nach einem der vorstehenden Ansprüche, wobei die Geräuschreduktionsschicht (26) eine Nut in einer Seite der Geräuschreduktionsschicht (26) parallel zum Seitenwandabschnitt (16) umfasst, wobei sich die Nut in die Dicke der Geräuschreduktionsschicht (26) erstreckt.

14. Verfahren zur Herstellung eines Reifens (10), umfassend:
Bereitstellen einer separaten Vielzahl von Teilen (26a, 26b, 26c) einer Geräuschreduktionsschicht (26); und Anordnen der Teile (26a, 26b, 26c) der Geräuschreduktionsschicht (26) auf dem Seitenwandabschnitt (16) eines Reifens (10), um eine Geräuschreduktionsschicht (26) zu bilden, die sich um den Umfang des Reifens (10) erstreckt,
wobei die Geräuschreduktionsschicht (26) eine innere radiale Seite (28) und eine äußere radiale Seite (30) definiert; und
wobei die äußere radiale Seite (30) der Geräuschreduktionsschicht (26) eine Beschichtung umfasst, die antiadhäsiv ist.

## Revendications

1. Pneumatique (10) comprenant :
une portion de bande de roulement (12) ;
une portion de talon (14) ; et
une portion de paroi latérale (16) s'étendant entre la portion de talon (14) et la portion de bande de roulement (12) ;
dans lequel la portion de bande de roulement (12), la portion de talon (14) et la portion de paroi latérale (16) définissent une cavité interne du pneumatique (10) ;
le pneumatique (10) comprenant en outre une couche de réduction de bruit (26) agencée sur la portion de paroi latérale (16) dans la cavité interne du pneumatique (10) ;
dans lequel la couche de réduction de bruit (26) définit un côté radial interne (28) et un côté radial externe (30) ; et
dans lequel la couche de réduction de bruit (26) comprend une pluralité de parties de couche de réduction de bruit (26a, 26b, 26c) distinctes ; le pneumatique étant **caractérisé en ce que** le côté radial externe (30) de la couche de réduction de bruit (26) comprend un revêtement anti-adhésif.

2. Pneumatique (10) selon la revendication 1, dans lequel le côté radial interne (28) comprend au moins une découpe (32).

3. Pneumatique (10) selon la revendication 1 ou la revendication 2, dans lequel le pneumatique (10) comprend une couche d'étanchéité adjacente à la portion de bande de roulement (12) dans la cavité interne du pneumatique (10).

4. Pneumatique (10) selon la revendication 3, dans lequel la couche de réduction de bruit (26) est agencée sur la portion de paroi latérale (16) de telle sorte que le côté radial externe (30) de la couche de réduction de bruit (26) est séparé de la couche d'étanchéité et le côté radial interne (28) de la couche de réduction de bruit (26) est séparé d'un bord radialement le plus interne de la portion de talon (14).

5. Pneumatique (10) selon la revendication 3, dans lequel le côté radial externe (30) de la couche de réduction de bruit (26) est agencé de telle sorte qu'il fournit entre un chevauchement allant jusqu'à 15 mm ou une séparation allant jusqu'à 55 mm avec la couche d'étanchéité et le côté radial interne (28) de la couche de réduction de bruit (26) est séparé d'un bord radialement le plus interne de la portion de talon (14) par une distance supérieure à 20 mm.

6. Pneumatique (10) selon l'une quelconque des revendications précédentes, dans lequel la couche de réduction de bruit (26) définit une épaisseur dans une direction perpendiculaire à la portion de paroi latérale (16) et l'épaisseur de la couche de réduction de bruit (26) varie dans une direction radiale du pneumatique (10).

7. Pneumatique (10) selon la revendication 6, dans lequel l'épaisseur de la couche de réduction de bruit (26) est un minimum adjacente à un bord externe de la couche de réduction de bruit (26).

8. Pneumatique (10) selon l'une quelconque des revendications précédentes, dans lequel le côté radial interne comprend une pluralité de découpes (32) et une distance entre une première découpe (32) et une deuxième découpe (32) est entre environ 30 et 400 mm dans une direction circonférentielle.

9. Pneumatique (10) selon l'une quelconque des revendications précédentes lorsqu'elle dépend de la revendication 2, dans lequel chaque découpe (32) s'étend dans la direction radiale entre 50 et 90 % de la profondeur de la couche de réduction de bruit (26) dans une direction radiale.

10. Pneumatique (10) selon l'une quelconque des revendications précédentes, dans lequel le revêtement anti-adhésif comprend du silicone.

11. Pneumatique (10) selon l'une quelconque des revendications précédentes, dans lequel la masse volumique de la couche de réduction de bruit (26) varie à travers l'épaisseur de la couche de réduction de bruit (26).

12. Pneumatique (10) selon la revendication 11, dans lequel la masse volumique de la couche de réduction de bruit (26) adjacente à la portion de paroi latérale (16) est inférieure à la masse volumique de la couche de réduction de bruit (26) adjacente à la cavité interne du pneumatique (10).

13. Pneumatique (10) selon l'une quelconque des revendications précédentes, dans lequel la couche de réduction de bruit (26) comprend une rainure dans un côté de la couche de réduction de bruit (26) parallèle à la portion de paroi latérale (16), dans lequel la rainure s'étend dans l'épaisseur de la couche de réduction de bruit (26).

14. Procédé pour la fabrication d'un pneumatique (10), comprenant :
la fourniture d'une pluralité distincte de parties (26a, 26b, 26c) de couche de réduction de bruit (26) ; et l'agencement des parties (26a, 26b, 26c) de couche de réduction de bruit (26) sur la portion de paroi latérale (16) d'un pneumatique (10) pour former une couche de réduction de bruit (26) s'étendant autour de la circonférence du pneumatique (10),
dans lequel la couche de réduction de bruit (26) définit un côté radial interne (28) et un côté radial externe (30) ; et
dans lequel le côté radial externe (30) de la couche de réduction de bruit (26) comprend un revêtement qui est anti-adhésif.
